# EUROPEAN PATENT APPLICATION

(11) **EP 2 452 858 A1**
(43) Date of publication of application: **16.05.2012**
(21) Application number: 10191170.9
(22) Date of filing: 15.11.2010
(51) Int. Cl.: B60W 20/00, B60W 30/18, B60K 6/48

(54) **Power train system and method for driving a vehicle**

(71) Applicant: Saab Automobile AB, 461 80 Trollhättan (SE)
(72) Inventor: Schlaich, Birger, 130 40, Djurhamn (SE); Barbunopulos, Stefan, 451 54, Uddevalla (SE)
(74) Representative: Milanov, Nina Vendela Maria

(57) **Abstract**

A powertrain system (2) for a vehicle (1) comprises an engine (3), a manual transmission (5), a clutch (6), a clutch actuator (7), and at least one pair of driven wheels (4a, 4b). The engine (3) is arranged to drive said at least one pair of driven wheels (4a, 4b) via the manual transmission. The clutch (6) is operable to connect and disconnect the engine (3) and the manual transmission (5) by actuation of the clutch actuator (7). The powertrain system (2) further comprises a motor arrangement (8) arranged to drive said at least one driven pair of wheels (4a, 4b). The clutch actuator (7) is operable to control the motor arrangement (8) for driving said at least one pair of driven wheels (4a, 4b). A method for driving a vehicle (1) having a powertrain system (2) is also disclosed.

## Description

### Technical Field of the Invention

The present invention relates to a powertrain system for a vehicle, comprising an engine, a manual transmission, a clutch, a clutch actuator, and at least one pair of driven wheels, wherein the engine is arranged to drive said at least one pair of driven wheels via the manual transmission, and wherein the clutch is operable to connect and disconnect the engine and the manual transmission by actuation of the clutch actuator.

### Background Art

Vehicles, such as cars and lorries, with manual transmission have the general advantage over vehicles with automatic transmission that they are more efficient in terms of weight, cost and fuel consumption. However, manual transmission vehicles also have a disadvantage in that they are more difficult and less comfortable to launch. In manual transmission vehicles, there is a discontinuity in the sense that the engine may be disconnected from the transmission by the driver using the clutch. The clutch enables three modes, namely the connected, mechanically fixed in-gear driving mode, fully disconnected neutral mode, and slipping clutch mode, the latter two being undefined. When launching the vehicle, the driver has to transit very carefully from the disconnected neutral mode, through the slipping clutch mode and into the in-gear driving mode, or else the launch becomes jerky or the engine may stall. This problem is even more pronounced when, in view of reducing fuel consumption, a lower numerical gear ratio is used and the engine is downsized.

Automatic transmission vehicles are generally easier to launch, but are less efficient when it comes to fuel economy. In automatic transmission vehicles, efforts have been made to reduce fuel consumption by combining an internal combustion engine with an electrical motor. WO 2010/054210 discloses an example of such a vehicle in which an electrical motor is used for launching the vehicle and in which an internal combustion engine starts to propel the vehicle once the proper engine speed has been reached.

Still, it would be desirable to be able to launch a manual transmission vehicle as easily and as smoothly as with an automatic transmission vehicle.

### Summary of the Invention

An object of the present invention is to provide a powertrain system for a vehicle and a method for driving a vehicle, which make it easier to launch a manual transmission vehicle. Another object of the invention is to provide a powertrain system and a method for driving a vehicle, which make it possible to benefit from the efficiency in terms of weight, cost and fuel consumption of a manual transmission vehicle, while yet making launching as easy as with an automatic transmission vehicle.

These objects are achieved, in full or at least in part by means of a powertrain system as claimed in claim 1 and by a method as claimed in claim 11. Preferred embodiments and variants are defined in the dependent claims.

The powertrain system of the invention is characterised in that it comprises a motor arrangement, the motor arrangement being arranged to drive said at least one driven pair of wheels, wherein the clutch actuator is operable to control the motor arrangement for driving said at least one pair of driven wheels. In this way, the normal clutch operation by the driver may be used for operating the motor arrangement. This makes it possible to start the motor arrangement by slightly releasing the clutch actuator from the fully depressed position, whereby the motor arrangement starts to propel the vehicle. Thus, the vehicle may start moving before the clutch has been released to such an extent that the engine starts to propel the vehicle. Launching the vehicle is thereby simplified and may be compared to launching a conventional manual transmission vehicle on a downhill slope.

The clutch actuator is preferably a clutch pedal.

In an embodiment, the powertrain system further comprises a controller, said controller being arranged to receive a first input from the clutch actuator indicative of a position of the clutch actuator and to transmit an output to the motor arrangement for operation of the motor arrangement. This is a convenient way of using the normal clutch operation by the driver for operating the motor arrangement.

The controller may further be arranged to receive a second input from an accelerator of the vehicle. This makes it possible to start the engine, before the clutch has reached a mechanical engagement point, which is useful if the driver wants to make a performance launch or launch a heavily loaded vehicle or a vehicle standing on an uphill slope. This also makes it possible to command additional acceleration from the motor arrangement.

The engine may be operably connected to a first driven axle for driving said at least one pair of driven wheels and the motor arrangement may be operably connected to a second driven axle for driving said at least one pair of driven wheels. In this manner, the control of the driving force from the engine and the motor arrangement may be kept entirely separate.

Alternatively, the engine and the motor arrangement may each be operably connected to a common driven axle for driving said at least one pair of driven wheels. This is advantageous in that no separate driven axle is needed for the motor arrangement. Thus, the motor arrangement of the inventive powertrain system may be implemented on an existing vehicle design.

The motor arrangement may comprise one common motor arranged to drive each of the driven wheels. Alternatively, the motor arrangement may comprise at least two motors, each being arranged to drive a respective one of the driven wheels. If a common motor is used, less components are needed. On the other hand, if one motor per wheel is used, smaller motors may be used, possibly making it easier to fit the motors on a particular vehicle. Further, in some vehicles, one motor per wheel is already used, for instance for torque vectoring, and these motors could then also be used for the inventive powertrain system.

In one embodiment, the clutch actuator is mechanically connected to the clutch. This is the case in most cars to date. It is hereby possible, for instance, to implement the powertrain system of the invention on an existing vehicle design.

In another embodiment, the clutch actuator is electrically connected to the clutch. This may be referred to as "clutch by wire" and makes it simpler to implement the powertrain system of the invention, since the motor arrangement is preferably also electrically connected to the clutch actuator.

The method of the invention for driving a vehicle comprises the steps of:
detecting a position of the clutch actuator,
using the detected position as a first input to the motor arrangement,
in dependence of the first input, operating the motor arrangement to drive said at least one pair of driven wheels. With this method, the vehicle may be launched more easily than is the case for conventional manual transmission vehicles. The motor arrangement may hereby be operated by the normal clutch operation by the driver. Thus, the motor arrangement may start to propel the vehicle before the clutch has reached a mechanical engagement point where power starts to transfer from the engine to the driven wheels. In this manner, the vehicle may be started as easily as would be the case when launching a conventional manual transmission vehicle on a downhill slope.

A variant of the method further comprises, if a gear of the transmission is engaged and the clutch actuator is determined to be in a first intermediate position, the electrical engagement point, starting the motor, thereby driving said at least one pair of driven wheels. Thus, the driver may show the intention to launch the vehicle by the normal clutch operation and the motor will start to propel the vehicle.

The method may further comprise, if a gear of the transmission is engaged, gradually increasing a power to said at least one pair of driven wheels from said motor as the clutch operator is determined to transit from the first intermediate position to a second intermediate position. Hereby, the speed of the vehicle may gradually increase as the clutch is released from the first intermediate position, which may be close to a fully depressed position, to the second intermediate position, which may be a position in which the clutch has reached a mechanical engagement point in which power from the engine is starting to transmit to the driven wheels.

Further, the method may comprise increasing the power to said at least one pair of driven wheels from said motor arrangement in response to actuation of an accelerator of the vehicle. Thus, the driver may command additional acceleration from the motor arrangement using the accelerator, just as would be done when launching a conventional vehicle with manual transmission.

In a variant, the method further comprises, if a gear of the transmission is engaged and the clutch actuator is determined to be in a fully depressed position, starting the engine in response to actuation of an accelerator of the vehicle. This is useful if the driver wants to make a performance launch or, as an example, launch a heavily loaded vehicle on an uphill slope.

The engine may drive said at least one driven pair of wheels by means of a first driven axle and the motor may drive said at least one pair of driven wheels by means of a second driven axle. Alternatively, the engine and the motor may drive said at least one pair of driven wheels by means of a common driven axle. As mentioned above in connection with the powertrain system of the invention, if a common motor is used, less components are needed. On the other hand, if one motor per wheel is used, smaller motors may be used, possibly making it easier to fit the motors on a particular vehicle. Further, in some vehicles, one motor per wheel is already used, for instance for torque vectoring, and these motors could then also be used in the inventive method.

Other objectives, features and advantages of the present invention will appear from the following detailed disclosure, from the attached claims, as well as from the drawings. It is noted that the invention relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of the Drawings

The invention will be described in more detail with reference to the appended schematic drawings, which show an example of a presently preferred embodiment of the invention.
Fig. 1 is a schematical view of a vehicle incorporating a powertrain system according to an embodiment of the invention.
Fig. 2 is a graph illustrating different stages of launching a vehicle having a powertrain system as shown in Fig. 1.

### Detailed Description of Preferred Embodiments of the Invention

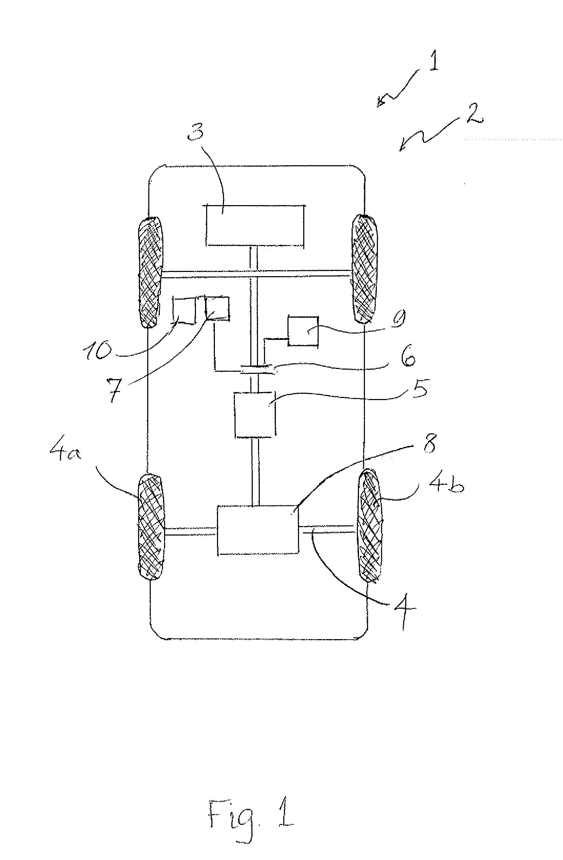

In Fig. 1, a vehicle 1 may be seen, which is equipped with a powertrain system 2 according to an embodiment of the invention. The powertrain system 2 comprises an engine 3 which is arranged to drive a pair of driven wheels 4a, 4b arranged on a driven axle 4. In the embodiment shown here, the driven wheels are the rear wheels 4a, 4b of the vehicle 1. The engine 3 is connected to the driven axle 4 via a manual transmission 5. A clutch 6 is arranged between the engine 3 and the driven axle 4 and may, as is well known to the skilled person, be used for disconnecting the engine 3 from the manual transmission 5 when shifting gears and for connecting the engine 3 to the driven axle 4 when the manual transmission 5 is in gear. The clutch 6 is operated by a clutch actuator in the form of a conventional clutch pedal 7. The powertrain system 2 further comprises an electrical motor 8, which is also arranged to drive the driven wheels 4a, 4b on the driven axle 4. A controller 9 is arranged to control the electrical motor 8. A position of the clutch pedal 7 is used as input to the controller 9. A position of a conventional accelerator pedal 10 may additionally be used as input to the controller 9.

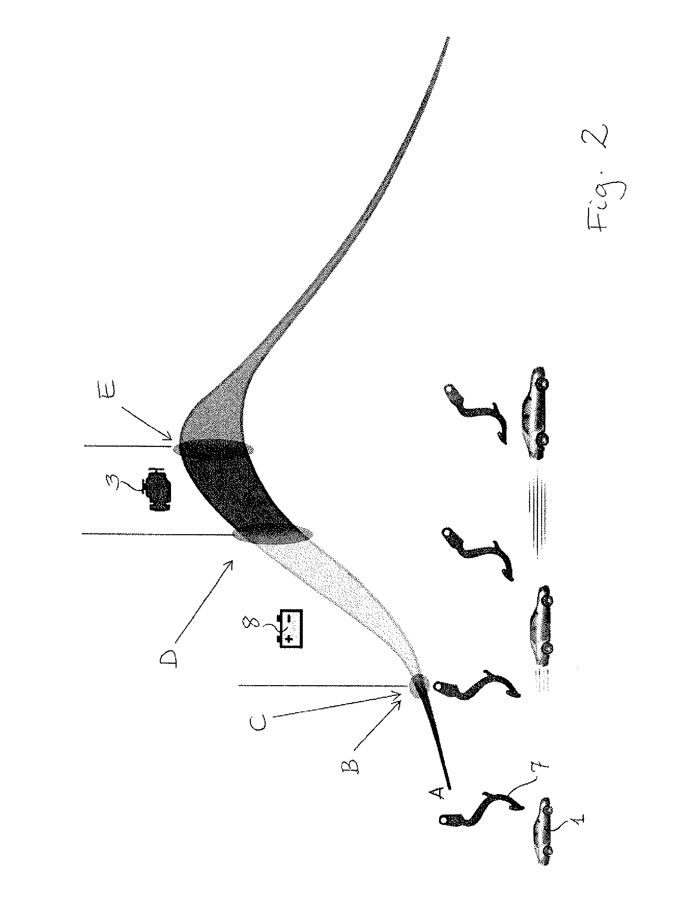

A method for driving the vehicle 1 by means of the powertrain system 2 will now be described with reference to Fig. 2. At first, as illustrated at point A in the graph in Fig. 2, the vehicle 1 is standing still. The clutch pedal 7 is fully depressed and the clutch 6 is therefore fully disengaged. Consequently, the engine 3 is disconnected from the manual transmission 5 and, hence, from the driven axle 4. Preferably, the vehicle has an auto-stop function that turns the engine 3 off in this situation, thereby saving fuel.

At point B, the clutch pedal 7 has been released slightly from the fully depressed position to a first intermediate position. A sensor (not shown) sensing the position of the clutch pedal 7 sends a signal to the controller 9 and this position is used as input for the controller 9. When the controller 9 receives the signal that the clutch pedal 7 is in the first intermediate position, the controller 9 sends an output signal to the electrical motor 8 starting the electrical motor 9. Hereby, the electrical motor 9 starts to drive the driven axle 4 and, thus, the driven wheels 4a, 4b, thereby propelling the vehicle 1 forwards or backwards, depending on if the manual transmission 5 is in one of the forward gears or in reverse gear.

At point C, with a mechanically connected clutch pedal, the engine 3 is started if it was previously turned off. With a clutch by wire system, the controller 9 will determine if and when an engine start is needed. Here, also, the controller 9 receives an input signal indicative of the position of the clutch pedal 7 and sends an output signal to the engine 3, thereby starting the engine 3.

As the clutch pedal 7 is gradually released from the first intermediate position at B to a second intermediate position at D, which is the mechanical engagement point, the force from the electrical motor 8 to the driven axle is gradually increased, thereby increasing the speed of the vehicle 1.

At point D, the mechanical engagement point is reached. With a mechanically connected clutch pedal 7, the clutch 6 will start to transfer torque from the engine 3 to the driven axle 4. With a clutch by wire system, the controller 9 will determine engine and clutch operation.

At point E, the clutch 6 is engaged and the vehicle 1 may now be propelled using only the engine 3. Thus, when the controller 9 receives a signal indicative of the clutch pedal 7 being fully released, the controller 9 may send an output signal to the electrical motor 8 turning the electrical motor 8 off. In some instances, however, it may be desirable to use power from the electrical motor 8 in addition to the power from the engine 3 to drive the driven axle 4 and thereby propel the vehicle 1.

If the driver wants to make a performance launch or if the vehicle 1 is heavily loaded and/or to be started on an uphill slope, the driver may depress the accelerator pedal 10 while the clutch pedal 7 is in a position between the fully depressed position at point A and the first intermediate position at B. A first input signal indicative of this clutch pedal position and a second input signal indicative of a depressed position of the accelerator pedal 10 are received by the controller 9 and the controller 9 sends an output signal to the electrical motor 8 increasing the force from the electrical motor 8 to the driven axle 4. The controller 9 may also send an output signal to the engine 3, thereby increasing the engine speed. In this manner, the engine speed may be synchronised to match the actual vehicle speed. If the controller 9 in this situation does not receive any input signal indicating that the accelerator pedal 10 is depressed, the vehicle speed will match the idle speed of the engine 3.

The skilled person realises that a number of modifications of the embodiments described herein are possible without departing from the scope of the invention, which is defined in the appended claims.

For instance, instead of driving the rear wheels 4a, 4b, the engine 3 could be arranged to drive the front wheels of the vehicles. Alternatively, the engine 3 could be arranged to drive all four wheels. The same holds true for the motor 8. The powertrain system of the invention is equally applicable to so called electronic all-wheel drive vehicles.

In the embodiment described above in connection with Fig. 1, the clutch 6 is electrically connected to the clutch pedal 7, but this connection could instead be a conventional mechanical, e.g. hydraulic, connection.

In the embodiment shown in Fig. 1, the engine 3 is an internal combustion engine, but this could be any other suitable type of engine.

## Claims

1. A powertrain system for a vehicle (1), comprising
an engine (3),
a manual transmission (5),
a clutch (6),
a clutch actuator (7), and
at least one pair of driven wheels (4a, 4b),
wherein the engine (3) is arranged to drive said at least one pair of driven wheels (4a, 4b) via the manual transmission (5), and wherein the clutch (6) is operable to connect and disconnect the engine (3) and the manual transmission (5) by actuation of the clutch actuator (7), **characterised in that** said powertrain system (2) further comprises a motor arrangement (8), the motor arrangement (8) being arranged to drive said at least one driven pair of wheels (4a, 4b), wherein the clutch actuator (7) is operable to control the motor arrangement (8) for driving said at least one pair of driven wheels (4a, 4b).

2. A powertrain system as claimed in claim 1, wherein the clutch actuator is a clutch pedal (7).

3. A powertrain system as claimed in claim 1 or 2, further comprising a controller (9), said controller (9) being arranged to receive a first input from the clutch actuator (7) indicative of a position of the clutch actuator (7) and to transmit an output to the motor arrangement (8) for operation of the motor arrangement (8).

4. A powertrain system as claimed in claim 3, wherein the controller (9) is further arranged to receive a second input from an accelerator (10) of the vehicle (1).

5. A powertrain system as claimed in any one of the preceding claims, wherein the engine (3) is operably connected to a first driven axle for driving said at least one pair of driven wheels (4a, 4b) and wherein the motor arrangement (8) is operably connected to a second driven axle for driving said at least one pair of driven wheels (4a, 4b).

6. A powertrain system as claimed in any one of claims 1-4, wherein the engine (3) and the motor arrangement (8) are each operably connected to a common driven axle (4) for driving said at least one pair of driven wheels (4a, 4b).

7. A powertrain system as claimed in any one of the preceding claims, wherein the motor arrangement comprises one common motor (8) arranged to drive each of the driven wheels (4a, 4b).

8. A powertrain system as claimed in any one of claims 1-6, wherein the motor arrangement (8) comprises at least two motors, each being arranged to drive a respective one of the driven wheels (4a, 4b).

9. A powertrain system as claimed in any one the preceding claims, wherein the clutch actuator (7) is mechanically connected to the clutch (6).

10. A powertrain system as claimed in any one of claims 1-8, wherein the clutch actuator (7) is electrically connected to the clutch (6).

11. A method for driving a vehicle (1), said vehicle (1) having a powertrain system (2) comprising an engine (3), a manual transmission (5), a clutch (6), a clutch actuator (7), at least one pair of driven wheels (4a, 4b), and a motor arrangement (8), said method comprising the steps of:
detecting a position of the clutch actuator (7),
using the detected position as a first input to the motor arrangement (8),
in dependence of the first input, operating the motor arrangement (8) to drive said at least one pair of driven wheels (4a, 4b).

12. A method as claimed in claim 11, further comprising, if a gear of the transmission (5) is engaged and the clutch actuator (7) is determined to be in a first intermediate position, starting the motor arrangement (8), thereby driving said at least one pair of driven wheels (4a, 4b).

13. A method as claimed in claim 12, further comprising, if a gear of the transmission (5) is engaged, gradually increasing a power to said at least one pair of driven wheels (4a, 4b) from said motor arrangement (8) as the clutch actuator (7) is determined to transit from the first intermediate position to a second intermediate position.

14. A method as claimed in claim 13, further comprising, if a gear of the transmission (5) is engaged, increasing the power to said at least one pair of driven wheels (4a, 4b) from said motor arrangement (8) in response to actuation of an accelerator (10) of the vehicle (1).

15. A method as claimed in any one of claims 12-14, further comprising, if a gear of the transmission (5) is engaged and the clutch actuator (7) is determined to be in a fully depressed position, starting the engine (3) in response to actuation of an accelerator (10) of the vehicle (1).

16. A method as claimed in any one of claims 11-15, wherein the engine (3) drives said at least one driven pair of wheels (4a, 4b) by means of a first driven axle and wherein the motor arrangement (8) drives said at least one pair of driven wheels (4a, 4b) by means of a second driven axle.

17. A method as claimed in any one of claims 11-15, wherein the engine (3) and the motor arrangement (8) drive said at least one pair of driven wheels (4a, 4b) by means of a common driven axle (4).
